# EUROPEAN PATENT SPECIFICATION

(11) **EP 1 493 621 B1**
(45) Date of publication and mention of the grant of the patent: **10.12.2008**
(21) Application number: 04015532.7
(22) Date of filing: 01.07.2004
(51) Int. Cl.: B60Q 3/02, F21S 10/02, F21V 23/00, F21W 101/00, F21W 131/40

(54) **Lighting device**
Beleuchtungsvorrichtung
Dispositif d'éclairage

(30) Priority: 03.07.2003 IL 15675503; 21.10.2003 IL 15851903
(43) Date of publication of application: 05.01.2005
(73) Proprietor: Eltam Ein Hashofet, Israel (IL)
(72) Inventor: Shofar, Ya'akov, Israel (IL)
(74) Representative: Betten & Resch

(56) References cited:
- EP-A- 1 195 740
- WO-A-01/84521
- WO-A-02/16826
- US-B1- 6 523 976

## Description

### Field of the Invention

The present invention relates to a lighting device and more particularly, to a lighting device suitable for military use, especially in vehicles.

### Background of the Invention

There often exists a need, both for military and civilian purposes, to utilize a lighting device which can provide regular bright illumination as commonly required, as well as to selectively provide lighting of a different nature, e.g., colored lights of limited illumination.

### Disclosure of the Invention

According to the present invention, there is therefore provided a lighting device for a vehicle comprising a sealed housing, an array of light emitting diodes consisting of at least two groups, each group emitting light of a specific color, at least one DC power supply for operating each said groups at different intensities, and a selector for controllably energizing each or both of said groups of light, emitting diodes, and a programmable controller. A lighting device of this type is disclosed in EP 1 195 740 A.

### Brief Description of the Drawings

The invention is herein described, by way of example only, with reference to the accompanying drawings.

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
- Fig. 1: is a top view of the lighting device according to the present invention;
- Fig. 2: is an isometric view of the base plate of the lighting device of Fig. 1;
- Fig. 3: is a circuit for energizing and controlling the lighting device according to the present invention;
- Fig. 4: is an isometric view of a further embodiment of the invention;
- Fig. 5: is a rear view of the enclosure of the lighting device of Fig. 4, and
- Fig. 6: is a block diagram for energizing and controlling the lighting device according to the present invention.

### Detailed Description

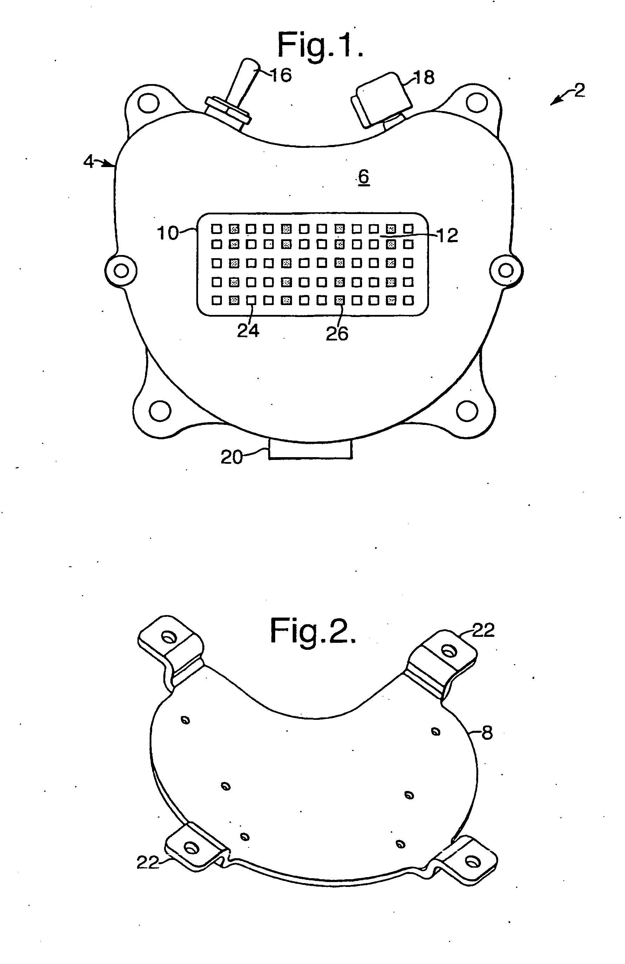

A preferred embodiment of a lighting device 2 according to the present invention is illustrated in Figs. 1 and 2. Seen is a housing 4 advantageously a two-part housing composed of an enclosure 6 and a base plate 8 of a curved configuration and hermetically sealed to render it waterproof. The housing parts 6 and 8 are interconnectable in any per-se known manner such as by press fitting and/or by screws. The enclosure 6 has an opening 10, protected by a transparent cover, preferably made of polycarbonate, accommodating an array of LEDs 12, details of which will be described hereinafter. Further seen is a selector embodied by a toggle switch 16 and a knob 18 for manipulating a potentiometer. Also provide is wiring inlet port 20. The base plate 8 is preferably made with flanges 22, facilitating anchoring of the housing 4 to a wall or ceiling.

The PCB-mounted array of LEDs 12, advantageously consists of 40 white LEDs 24 interlaced with 20 bluish/green LEDs 26 (~506 nm) providing an active LED area of approximately 30 x 68 mm. The 40 white LEDs 24 are energized from a 200mA, 14Vdc source, while the 20 bluish/green LEDs 26 are energized from 100mA, 14Vdc source. The desired luminous intensity should be at least Lv400 med at 120 degrees.

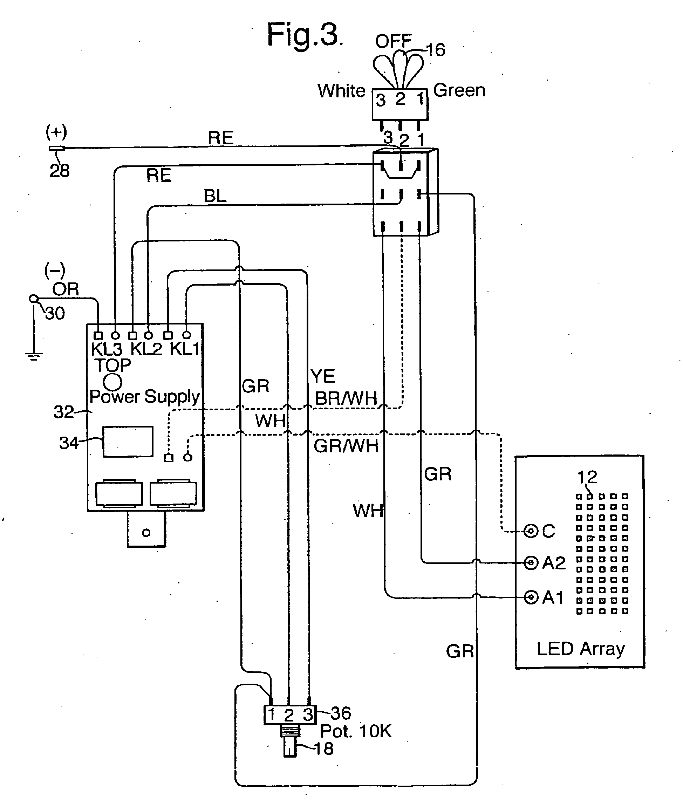

Turning now to Fig. 3, there is illustrated a preferred circuit diagram of the lighting device 2 according to the present invention. The device 2 is externally powered from a DC source, e.g., 18-36 Vdc of a vehicle's battery, through input plugs and/or sockets 28, 30 and optionally includes an internal emergency power supply 32. The power supply 32 may be formed by two sub-units, one operable for short periods of time using a super-capacitor, while the other sub-unit for a longer period of time, utilizing emergency batteries. The power supply 32 is also furnished with a voltage stabilizer 34. A potentiometer 36 manipulatable by knob 18 conveniently facilitates dimming of the white, bluish/green or both, lights. The circuit may also include a low noise built-in EMI RFI filter.

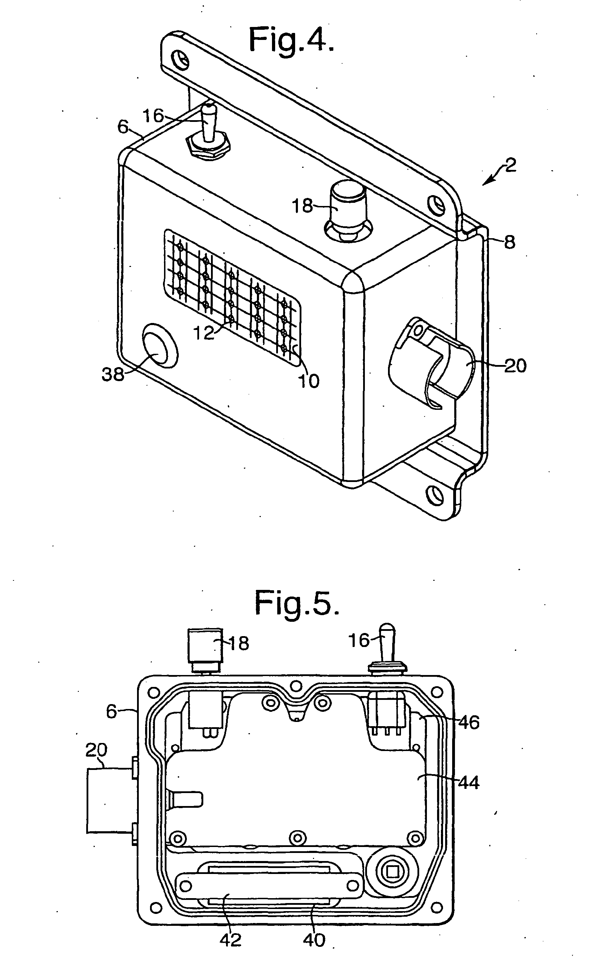

Referring to Figs. 4 and 5 there is illustrated a further embodiment of the lighting device according to the present invention. Seen is the enclosure 6, the base plate 8, to which the enclosure 6 is attachable, the opening 10 protected by a transparent cover, the array of white and blue LEDs 12, an emergency button 38, as well as other parts of the device numbered by the same numbers allocated to the various parts shown in Figs. 1 and 2. Inside the enclosure 6 (Fig. 5) there are further located an emergency battery 40 held in position by a battery support plate 42, a PCB 44 and a heat sink 46 for dispersing the heat generated by the LEDs 12.

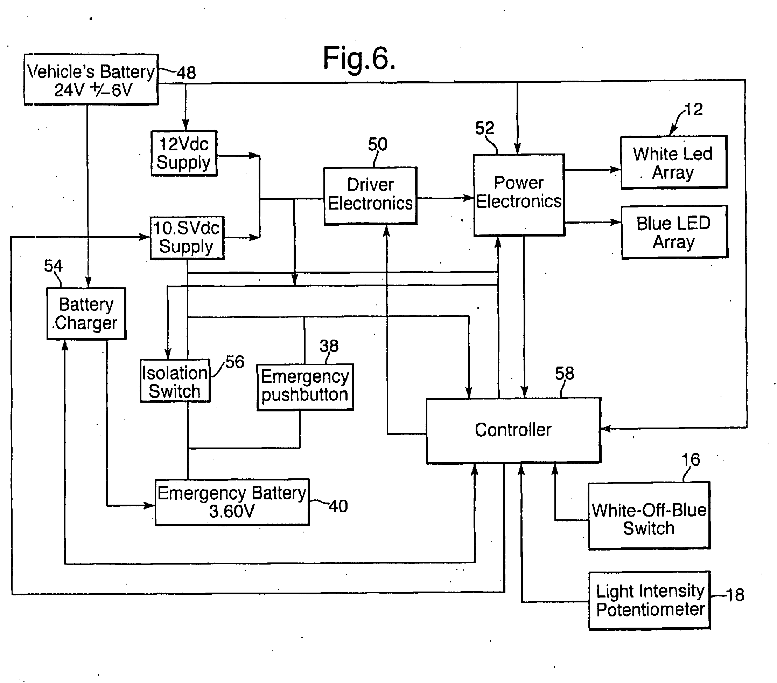

Turning now to Fig. 6, there is illustrated a block diagram of the lighting device according to the present invention, illustrating the operation of the lighting device.

Under normal conditions the vehicle's battery 48 feeds the driver and power electronics 50, 52, LEDs 12 and the battery charger 54. When the vehicle's battery is disconnected, the emergency battery 40, which may be of a lower voltage than the vehicle's voltage, e.g., 3.6 Vdc, is automatically enabled for a predetermined short period, e.g., 30 seconds. An additional period (e.g., 15 minutes) of emergency operation is selectable by briefly pressing the emergency pushbutton 38. This can be repeated several times with total emergency capacity of at least 60 minutes. The isolation switch 56 prevents unnecessary discharge of the emergency battery 40. The programmable controller 58 controls the entire electronic circuit during normal and emergency operations according to the program fused into its EPROM, as well as the data that flows into its inputs from the circuit components, the vehicle's battery and the environment. Furthermore, the programmable controller 58 also monitors the voltage of the vehicle's battery 48 and renders the LEDs 12 blinking when this voltage falls under a predetermined value.

It will be evident to those skilled in the art that the invention is not limited to the details of the foregoing illustrated embodiments and that the present invention may be embodied in other specific forms. The present embodiments are therefore to be considered in all respects as illustrative and not restrictive, the scope of the invention being indicated by the appended claims.

## Claims

1. A lighting device (2) for a vehicle, said lighting device comprising:
a sealed housing (4);
an array of light emitting diodes (12) consisting of at least two groups (24,26), each group emitting light of a specific color;
a selector (16) for controllably energizing each or both of said groups of light emitting diodes, and
a programmable controller (58) for controlling the operation of the device,
**characterised by** said lighting device being connectable to at least one DC power supply for operating each of said groups at different intensities wherein said power supply is the power supply of said vehicle; and by said programmable controller monitoring said vehicle's power supply.

2. The lighting device as claimed in claim 1, wherein said group of diodes consists of a first group of white light emitting diodes and of a second group of blue or bluish/green light emitting diodes.

3. The lighting device as claimed in claim 1, further comprising means for attaching the device to a wall or ceiling of an enclosure.

4. The lighting device as claimed in claim 3, wherein said enclosure is a part of a vehicle.

5. The lighting device as claimed in claim 1, wherein said housing is a two-part, hermetically sealed, housing.

6. The lighting device as claimed in claim 1, further comprising an emergency power supply unit (32) and activator (38) operable instead of said DC power supply.

7. The lighting device as claimed in claim 6, wherein said emergency power supply unit consists of two sub-units, a first sub-unit operable for a short period of time and a second sub-unit operable for a longer period of time.

8. The lighting device as claimed in claim 6, wherein said emergency supply unit (32) consists of a DC source (40) having a voltage lower than said DC power supply.

9. The lighting device as claimed in claim 1, further comprising a potentiometer (36) for dimming at least one group of said two groups of light-emitting diodes.

10. The lighting device as claimed in claim 1, further comprising a heat sink (46) for dispensing heat generated by said light emitting diodes.

11. The lighting device as claimed in claim 1, wherein said device is suitable for military use in vehicles said housing is hermetically sealed to render it waterproof and comprising an opening (10) protected by a transparent cover, accommodating the array of light emitting diodes.

12. The lighting device as claimed in claim 6**,** wherein when the vehicle's battery is disconnected, said emergency power supply unit (32) is automatically enabled for a predetermined short period and additional period of emergency operation is selectable by briefly pressing an emergency pushbutton (38).

13. The lighting device as claimed in claim 1, wherein said controller (58) renders said light emitting diodes (12) blinking when the voltage of said vehicle's power supply falls under a predetermined value.

## Patentansprüche

1. Beleuchtungsvorrichtung (2) für ein Kraftfahrzeug, wobei die Beleuchtungsvorrichtung Folgendes aufweist:
ein abgedichtetes Gehäuse (4);
eine Anordnung von lichtemittierenden Dioden (12), die aus wenigstens zwei Gruppen (24, 26) bestehen, wobei jede Gruppe Licht einer spezifischen Farbe emittiert;
einen Selektor (16) zum steuerbaren Erregen einer jeweiligen oder beider der Gruppen von lichtemittierenden Dioden; und
eine programmierbare Steuerung (58) zum Steuern des Betriebs der Vorrichtung,
**dadurch gekennzeichnet, dass** die Beleuchtungsvorrichtung mit wenigstens einer Gleichstromversorgung zum Betreiben jeder der Gruppen mit unterschiedlichen Intensitäten verbindbar ist, wobei die Stromversorgung die Stromversorgung des Kraftfahrzeugs ist, und dass die programmierbare Steuerung die Energieversorgung des Kraftfahrzeugs überwacht.

2. Beleuchtungsvorrichtung nach Anspruch 1, wobei die Gruppe von Dioden aus einer ersten Gruppe von weißen lichtemittierenden Dioden und aus einer zweiten Gruppe von blauen oder bläulichen/grünen lichtemittierenden Dioden besteht.

3. Beleuchtungsvorrichtung nach Anspruch 1, die weiterhin eine Einrichtung zum Anbringen der Vorrichtung an einer Wand oder einer Decke einer Einhausung aufweist.

4. Beleuchtungsvorrichtung nach Anspruch 3, wobei die Einhausung ein Teil eines Kraftfahrzeugs ist.

5. Beleuchtungsvorrichtung nach Anspruch 1, wobei das Gehäuse ein zweiteiliges, hermetisch abgedichtetes Gehäuse ist.

6. Beleuchtungsvorrichtung nach Anspruch 1, die weiterhin eine Notstromversorgungseinheit (32) und einen Auslöser (38) aufweist, die anstelle der Gleichstromversorgung betreibbar sind.

7. Beleuchtungsvorrichtung nach Anspruch 6, wobei die Notstromversorgungseinheit aus zwei Untereinheiten besteht, nämlich einer ersten Untereinheit, die für eine kurze Zeitperiode bestreibbar ist, und einer zweiten Untereinheit, die für eine längere Zeitperiode betreibbar ist.

8. Beleuchtungsvorrichtung nach Anspruch 6, wobei die Notstromversorgungseinheit (32) aus einer Gleichstromquelle (40) mit einer Spannung besteht, die niedriger als die der Gleichstromversorgung ist.

9. Beleuchtungsvorrichtung nach Anspruch 1, die weiterhin ein Potentiometer (36) zum Abblenden wenigstens einer Gruppe der zwei Gruppen von lichtemittierenden Dioden aufweist.

10. Beleuchtungsvorrichtung nach Anspruch 1, die weiterhin eine Wärmesenke (46) zum Abgeben von durch die lichtemittierenden Dioden erzeugter Wärme aufweist.

11. Beleuchtungsvorrichtung nach Anspruch 1, wobei die Vorrichtung zum militärischen Einsatz in Kraftfahrzeugen geeignet ist, das Gehäuse hermetisch abgedichtet ist, um es wasserfest werden zu lassen, und eine durch eine transparente Abdeckung geschützte Öffnung (10) aufweist, die die Anordnung von lichtemittierenden Dioden unterbringt.

12. Beleuchtungsvorrichtung nach Anspruch 6, wobei dann, wenn die Kraftfahrzeugbatterie nicht angeschlossen ist, die Notstromversorgungseinheit (32) für eine vorbestimmte kurze Zeitperiode automatisch freigegeben wird und eine zusätzliche Periode eines Notbetriebs durch kurzes Drücken einer Not-Drucktaste (38) auswählbar ist.

13. Beleuchtungsvorrichtung nach Anspruch 1, wobei die Steuerung (58) die lichtemittierenden Dioden (12) blinken lässt, wenn die Spannung der Stromversorgung des Kraftfahrzeugs unter einen vorbestimmten Wert abfällt.

## Revendications

1. Dispositif d'éclairage (2) pour un véhicule, ledit dispositif d'éclairage comprenant :
un logement étanche (4) ;
un ensemble de diodes électroluminescentes (12) consistant en au moins deux groupes (24, 26), chaque groupe émettant une lumière d'une couleur spécifique ;
un sélecteur (16) pour alimenter de manière contrôlable chacun ou les deux desdits groupes de diodes électroluminescentes, et
un contrôleur programmable (58) pour commander le fonctionnement du dispositif, **caractérisé en ce que** ledit dispositif d'éclairage peut être connecté à au moins une alimentation continue pour faire fonctionner chacun desdits groupes à différentes intensités, dans lequel ladite alimentation est l'alimentation dudit véhicule, et **en ce que** ledit contrôleur programmable surveille ladite alimentation du véhicule.

2. Dispositif d'éclairage selon la revendication 1, dans lequel ledit groupe de diodes consiste en un premier groupe de diodes électroluminescentes blanches et en un deuxième groupe de diodes électroluminescentes bleues ou bleuâtres/vertes.

3. Dispositif d'éclairage selon la revendication 1, comprenant en outre des moyens pour fixer le dispositif à une paroi ou un plafond d'une enceinte.

4. Dispositif d'éclairage selon la revendication 3, dans lequel ladite enceinte est une partie d'un véhicule.

5. Dispositif d'éclairage selon la revendication 1, dans lequel ledit logement est un logement fermé hermétiquement en deux parties.

6. Dispositif d'éclairage selon la revendication 1, comprenant en outre une unité d'alimentation d'urgence (32) et un activateur (38) pouvant être mis en oeuvre à la place de ladite alimentation continue.

7. Dispositif d'éclairage selon la revendication 6, dans lequel ladite unité d'alimentation d'urgence consiste en deux sous-unités, une première sous-unité pouvant être mise en oeuvre pendant une courte période de temps et une deuxième sous-unité pouvant être mise en oeuvre pendant une plus longue période de temps.

8. Dispositif d'éclairage selon la revendication 6, dans lequel ladite unité d'alimentation d'urgence (32) consiste en une source de courant continu (40) ayant une tension inférieure à celle de ladite alimentation continue.

9. Dispositif d'éclairage selon la revendication 1, comprenant en outre un potentiomètre (36) pour diminuer l'éclairage d'au moins un groupe desdits deux groupes de diodes électroluminescentes.

10. Dispositif d'éclairage selon la revendication 1, comprenant en outre un dissipateur thermique (46) pour distribuer 1a chaleur générée par lesdites diodes électroluminescentes.

11. Dispositif d'éclairage selon la revendication 1, dans lequel ledit dispositif est adapté pour une utilisation militaire dans des véhicules, ledit logement est fermé hermétiquement pour le rendre étanche à l'eau et comprend une ouverture (10) protégée par un capot transparent, logeant l'ensemble de diodes électroluminescentes.

12. Dispositif d'éclairage selon la revendication 6, dans lequel, lorsque la batterie du véhicule est déconnectée, ladite unité d'alimentation d'urgence (32) est activée automatiquement pendant une courte période prédéterminée et une période de fonctionnement d'urgence supplémentaire peut être sélectionnée en enfonçant brièvement un bouton-poussoir d'urgence (38).

13. Dispositif d'éclairage selon la revendication 1, dans lequel ledit contrôleur (58) fait clignoter lesdites diodes électroluminescentes (12) lorsque la tension de ladite alimentation du véhicule tombe au-dessous d'une valeur prédéterminée.
